# EUROPÄISCHE PATENTSCHRIFT

(11) **EP 3 904 124 B1**
(45) Veröffentlichungstag und Bekanntmachung des Hinweises auf die Patenterteilung: **15.11.2023**
(21) Anmeldenummer: 20211242.1
(22) Anmeldetag: 02.12.2020
(51) Int. Cl.: B60C 13/00, B60C 19/00, B60C 19/08, G06K 19/077

(54) **FAHRZEUGREIFEN**
VEHICLE TYRE
PNEU DE VÉHICULE

(30) Priorität: 29.04.2020 DE 102020205406
(43) Veröffentlichungstag der Anmeldung: 03.11.2021
(73) Patentinhaber: Continental Reifen Deutschland GmbH, 30165 Hannover (DE)
(72) Erfinder: Kleffmann, Jens - c/o Continental AG, 30419 Hannover (DE); Koch, Michael - c/o Continental AG, 30419 Hannover (DE)
(74) Vertreter: Continental Corporation

(56) Entgegenhaltungen:
- EP-A1- 3 088 215
- WO-A1-2008/038334
- WO-A1-2020/058020
- DE-A1-102009 044 800
- DE-A1-102016 217 684
- DE-A1-102018 200 103
- US-A1- 2002 179 311

## Beschreibung

Die Erfindung betrifft einen Fahrzeugreifen.

Es ist bekannt, dass Fahrzeugreifen eine Mindestleitfähigkeit aufweisen müssen. Diese Mindestleitfähigkeit soll sicherstellen, dass beim Betanken eines Fahrzeuges keine statische Aufladung des Fahrzeuges erfolgen kann. Damit soll die Gefahr einer explosiven Entladung ausgeschlossen werden.

Um die elektrische Leitfähigkeit von Fahrzeugreifen bereitzustellen, gibt es unterschiedliche Maßnahmen, die einen Einfluss auf den Rollwiderstand des Fahrzeugreifens haben. Die Maßnahmen zur Sicherstellung der erforderlichen elektrischen Leitfähigkeit haben im Allgemeinen zur Folge, dass sich der Rollwiderstand des Fahrzeugreifens erhöht.

WO 2008/038334 A1 beschreibt ein Kraftfahrzeug, bei dem ein Reifen elektrisch leitend und die anderen Reifen elektrisch nicht leitend ausgeführt sind. Die elektrisch nicht leitenden Reifen haben einen elektrischen Widerstand von mindestens 10⁹ Ohm. Um dies zu erreichen, besteht die Lauffläche aus einem nicht leitenden Gummimaterial.

Der Erfindung liegt die Aufgabe zugrunde, einen Fahrzeugreifen bereitzustellen, bei dem der Rollwiderstand verbessert ist und bei dem das Risiko einer Montage an einem dafür ungeeigneten Fahrzeug reduziert ist.

Gelöst wird die Aufgabe gemäß Anspruch 1.

Ein Vorteil der Erfindung ist insbesondere darin zu sehen, dass damit Fahrzeugreifen für spezielle Fahrzeuge bereitgestellt werden können, die einen geringen Rollwiderstand aufweisen als herkömmliche Fahrzeugreifen. Die neuen Fahrzeugreifen haben einen sehr hohen elektrischen Widerstand und sind damit praktisch nicht leitfähig ausgeführt.

Das kann bedeuten, dass der Reifen beispielsweise keinen oder in Bezug auf die verschiedenen Reifenbauteile nur einen sehr geringen Rußanteil aufweisen. Durch den geringen Rußanteil in der Gummimischung wird der Rollwiderstand des Fahrzeugreifens wesentlich verbessert. Gleichzeitig wird durch die spezielle Kennzeichnung der Fahrzeugreifen sichergestellt, dass diese Fahrzeugreifen auf speziellen Fahrzeugen montiert werden.

Die Informationen auf dem RFID-Chip können automatisiert mit einem Bordcomputer des Fahrzeuges ausgelesen werden. Anschließend würde eine Warnmeldung ausgegeben werden, wenn der spezielle Fahrzeugreifen beispielsweise versehentlich auf einem Fahrzeug mit einem Verbrennungsmotor montiert worden ist.

Bei den speziellen Fahrzeugen kann es sich beispielsweise um ein Fahrzeug mit einem Elektroantrieb handeln.

Beim Aufladen der Batterie für den Elektroantrieb ist immer sichergestellt, dass eine elektrische Erdung vorhanden ist. Daher kann es beim Aufladen der Batterie nicht zu einer statischen Entladung des Fahrzeuges kommen. Außerdem wird das Fahrzeug nicht mit Treibstoff betankt, welches sich bei einer statischen Entladung entzünden kann.

Die speziellen Fahrzeuge mit einem Elektroantrieb können dadurch mit Fahrzeugreifen bestückt werden, die einen besonders geringen Rollwiderstand aufweisen.

In einer vorteilhaften Weiterbildung der Erfindung ist vorgesehen, dass der Fahrzeugreifen einen elektrischen Widerstand von größer als 10⁷ Ohm, vorzugsweise größer als 10⁸ Ohm, 10¹⁰ Ohm oder 10¹² Ohm, aufweist.

Wenn die Notwendigkeit einer elektrischen Leitfähigkeit eines Reifens nicht gegeben ist, können Reifen besser hinsichtlich Rollwiderstand optimiert werden.

Die einzelnen Reifenbauteile des Fahrzeugreifens können beispielsweise mit weniger oder gar keinem Rußmaterial versehen werden.

In einer weiteren vorteilhaften Weiterbildung der Erfindung ist vorgesehen, dass die spezielle Kennzeichnung angibt, dass der Fahrzeugreifen aufgrund des hohen Widerstandes nicht leitend ist und nur für spezielle Fahrzeuge zugelassen ist.

Dadurch kann sichergestellt werden, dass die Fahrzeugreifen nicht versehentlich an Fahrzeugen mit einem Verbrennungsmotor montiert werden.

In einer weiteren vorteilhaften Weiterbildung der Erfindung ist vorgesehen, dass der Fahrzeugreifen ausschließlich für spezielle Fahrzeuge mit einem Elektromotorantrieb zugelassen ist.

Insbesondere bei Elektrofahrzeugen ist es wichtig, dass diese mit Fahrzeugreifen bestückt werden, die einen geringen Rollwiderstand aufweisen.

In einer weiteren vorteilhaften Weiterbildung der Erfindung ist vorgesehen, dass der Fahrzeugreifen ausschließlich für spezielle Fahrzeuge mit einer zusätzlichen elektrischen Schutzerdung zugelassen ist.

Über die zusätzliche elektrische Schutzerdung wird sichergestellt, dass das Fahrzeug sich nicht statisch aufladen kann.

Die zusätzliche Schutzerdung kann beispielsweise in Form eines freien und leitenden Kabels ausgeführt sein, welches auf der Unterseite des Fahrzeuges befestigt ist und lose am Boden aufliegt.

In einer weiteren vorteilhaften Weiterbildung der Erfindung ist vorgesehen, dass nur spezielle Reifenbauteile einen elektrischen Widerstand von größer als 10⁷ Ohm, vorzugsweise als 10⁸ Ohm, 10¹⁰ Ohm oder 10¹² Ohm, aufweisen.

Bestimmte Reifenbauteile haben einen sehr hohen Einfluss auf den Rollwiderstand des Fahrzeugreifens. Im Allgemeinen ist es ausreichend, nur diese Reifenbauteile im Hinblick auf die elektrische Leitfähigkeit zu beeinflussen.

In einer weiteren vorteilhaften Weiterbildung der Erfindung ist vorgesehen, dass die speziellen Reifenbauteile zumindest den Laufstreifen, die Seitenwand und/oder die Gürtelgummierung umfassen.

Diese Reifenbauteile haben im Allgemeinen den größten Einfluss auf den Rollwiderstand des Fahrzeugreifens.

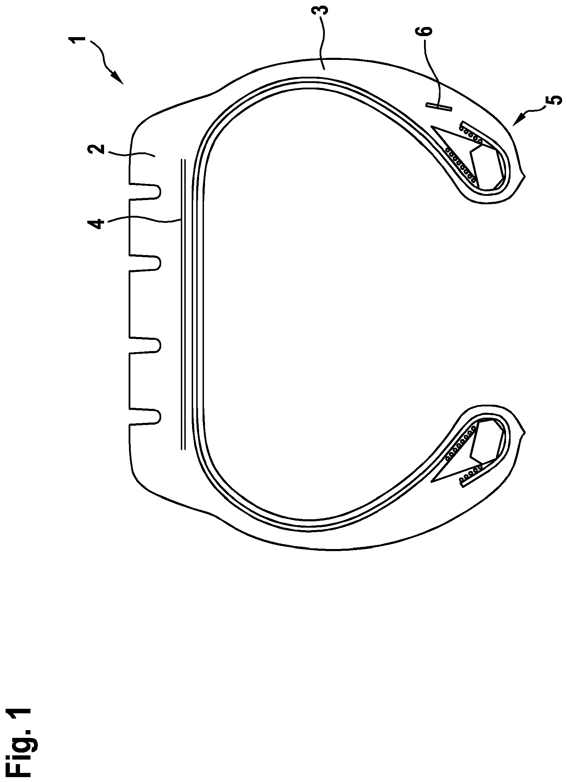

Anhand von Ausführungsbeispielen soll die Erfindung näher erläutert werden. Es zeigt: Fig. 1: einen Reifenabschnitt

Die Figur 1 zeigt einen Reifenabschnitt eines Fahrzeugreifens 1 in einer Radialschnittansicht. Der Fahrzeugreifen 1 umfasst eine Vielzahl von Reifenbauteilen, wie den Laufstreifen 2, die Seitenwände 3, den Reifengürtel 4 und den Reifenwulst 5.

Der Fahrzeugreifen 1 hat einen insgesamt sehr hohen elektrischen Widerstand von größer als 10⁶ Ohm. Diese elektrische Leitfähigkeit wird unter anderem dadurch erreicht, dass auf bestimmte Füllstoffe bei den Gummimischungen für die Reifenbauteile verzichtet wird.

Bei diesen Füllstoffen handelt es sich beispielsweise um Rußpartikel, die im Normalfall die elektrische Leitfähigkeit für eine Gummimischung herstellen.

Außerdem weist der Fahrzeugreifen 1 eine Kennzeichnung auf, die angibt, dass der Fahrzeugreifen nur für spezielle Fahrzeuge zugelassen ist.

Bei diesen Fahrzeugen handelt es sich beispielsweise um Fahrzeuge mit einem Elektroantrieb. Die entsprechende Kennzeichnung besteht darin, dass der Fahrzeugreifen 1 einen Transponder 6 aufweist.

Auf dem Transponder 6 sind alle Informationen zu dem Fahrzeugreifen 1 abgespeichert. Zu diesen Informationen zählt ebenfalls, dass der Fahrzeugreifen 1 nicht leitfähig ist und ausschließlich für spezielle Fahrzeuge zugelassen ist.

Der Transponder 6 kann automatisiert mit einem externen Lesegerät ausgelesen werden.

Bei diesem externen Lesegerät kann es sich beispielsweise um den Bordcomputer eines Fahrzeuges handeln. Für den Fall, dass der Fahrzeugreifen versehentlich an einem Fahrzeug mit einem Verbrennungsmotor montiert worden ist, würde eine entsprechende Warnmeldung ausgegeben werden.

Die Warnmeldung könnte damit verbunden sein, dass die Zündung des Fahrzeuges deaktiviert wird.

Bestimmte Reifenbauteile haben einen sehr hohen Einfluss auf den Rollwiderstand des Fahrzeugreifens. Im Allgemeinen ist es ausreichend, nur diese Reifenbauteile im Hinblick auf die elektrische Leitfähigkeit zu beeinflussen.

Die Messmethode zur Bestimmung der elektrischen Leitfähigkeit eines Reifens ist insb. in der Norm ISO 16392 beschrieben.

### Bezugszeichenliste (ist Teil der Beschreibung)

- 1: Fahrzeugreifen
- 2: Laufstreifen
- 3: Seitenwand
- 4: Reifengürtel
- 5: Reifenwulst
- 6: Transponder bzw. RFID-Chip

## Patentansprüche

1. Fahrzeugreifen (1) mit einem Laufstreifen (2), zwei Seitenwänden (3), einer Reifeninnenseite, einem Reifenhohlraum, mindestens einer Karkasslage und einer Gürtellage (4),
wobei die Reifenbauteile unterschiedliche Gummimischungen und Festigkeitsträger aufweisen,
wobei der Fahrzeugreifen einen gemäß der Norm ISO 16392 zu ermittelnden elektrischen Widerstand von größer als 10⁶ Ohm aufweist,
**dadurch gekennzeichnet, dass**
der Fahrzeugreifen (1) eine spezielle Kennzeichnung aufweist, die angibt, dass der Fahrzeugreifen (1) ausschließlich für spezielle Fahrzeuge zugelassen ist, und
wobei die Informationen für die spezielle Kennzeichnung auf einem RFID-Chip (6) gespeichert sind und der RFID-Chip (6) fest mit dem Fahrzeugreifen (1) verbaut ist und wobei zu diesen Informationen zählt, dass der Fahrzeugreifen nicht leitfähig ist.

2. Fahrzeugreifen (1) nach Anspruch 1,
**dadurch gekennzeichnet, dass**
der Fahrzeugreifen (1) einen elektrischen Widerstand von größer als 10⁷ Ohm, vorzugsweise größer als 10⁸ Ohm, 10¹⁰ Ohm oder 10¹² Ohm, aufweist.

3. Fahrzeugreifen (1) nach einem der vorhergehenden Ansprüche,
**dadurch gekennzeichnet, dass**
die spezielle Kennzeichnung angibt, dass der Fahrzeugreifen (1) aufgrund des hohen Widerstandes nicht leitend ist und nur für spezielle Fahrzeuge zugelassen ist.

4. Fahrzeugreifen (1) nach einem der vorhergehenden Ansprüche,
**dadurch gekennzeichnet, dass**
der Fahrzeugreifen (1) ausschließlich für spezielle Fahrzeuge mit einem Elektromotorantrieb zugelassen ist.

5. Fahrzeugreifen (1) nach einem der vorhergehenden Ansprüche,
**dadurch gekennzeichnet, dass**
der Fahrzeugreifen (1) ausschließlich für spezielle Fahrzeuge mit einer zusätzlichen elektrischen Schutzerdung zugelassen ist.

6. Fahrzeugreifen (1) nach einem der vorhergehenden Ansprüche,
**dadurch gekennzeichnet, dass**
nur spezielle Reifenbauteile einen elektrischen Widerstand von größer als 10⁷ Ohm, vorzugsweise größer als 10⁸ Ohm, 10¹⁰ Ohm oder 10¹² Ohm, aufweisen.

7. Fahrzeugreifen (1) nach Anspruch 6,
**dadurch gekennzeichnet, dass**
die speziellen Reifenbauteile zumindest den Laufstreifen (2), die Seitenwände (3) und/oder die Gürtelgummierung umfassen.

## Claims

1. Vehicle tyre (1) having a tread (2), two sidewalls (3), a tyre inside, a tyre cavity, at least one carcass ply and a belt ply (4),
wherein the tyre components have different rubber compounds and reinforcements,
wherein the vehicle tyre has an electrical resistance of greater than 10⁶ ohms that can be ascertained according to ISO standard 16392,
**characterized in that**
the vehicle tyre (1) has a specific identification indicating that the vehicle tyre (1) is approved exclusively for specific vehicles, and
wherein the information for the specific identification is stored on an RFID chip (6) and the RFID chip (6) is installed permanently with the vehicle tyre (1) and wherein this information includes that the vehicle tyre is nonconductive.

2. Vehicle tyre (1) according to Claim 1,
**characterized in that**
the vehicle tyre (1) has an electrical resistance of greater than 10⁷ ohms, preferably greater than 10⁸ ohms, 10¹⁰ ohms or 10¹² ohms.

3. Vehicle tyre (1) according to either of the preceding claims,
**characterized in that**
the specific identification indicates that the vehicle tyre (1) is nonconductive on account of the high resistance and is approved only for specific vehicles.

4. Vehicle tyre (1) according to one of the preceding claims,
**characterized in that**
the vehicle tyre (1) is approved exclusively for specific vehicles having an electric motor drive.

5. Vehicle tyre (1) according to one of the preceding claims,
**characterized in that**
the vehicle tyre (1) is approved exclusively for specific vehicles having an additional electrical protective earthing.

6. Vehicle tyre (1) according to one of the preceding claims,
**characterized in that**
only specific tyre components have an electrical resistance of greater than 10⁷ ohms, preferably greater than 10⁸ ohms, 10¹⁰ ohms or 10¹² ohms.

7. Vehicle tyre (1) according to Claim 6,
**characterized in that**
the specific tyre components comprise at least the tread (2), the sidewalls (3) and/or the belt rubber mix.

## Revendications

1. Pneu de véhicule (1), comprenant une bande de roulement (2), deux flancs (3), une face intérieure de pneu, une cavité de pneu, au moins une nappe de carcasse et une nappe de ceinture (4),
dans lequel les composants de pneu présentent différents mélanges de caoutchouc et des renforts,
dans lequel le pneu de véhicule présente une résistance électrique supérieure à 10⁶ ohms, à déterminer selon la norme ISO 16392,
**caractérisé en ce que** le pneu de véhicule (1) présente une identification spéciale qui indique que le pneu de véhicule (1) est autorisé exclusivement pour des véhicules spéciaux, et
dans lequel les informations pour l'identification spéciale sont stockées sur une puce RFID (6), et la puce RFID (6) est installée de manière solidaire avec le pneu de véhicule (1), et dans lequel ces informations comprennent le fait que le pneu de véhicule n'est pas conducteur.

2. Pneu de véhicule (1) selon la revendication 1, **caractérisé en ce que** le pneu de véhicule (1) présente une résistance électrique supérieure à 10⁷ ohms, de préférence supérieure à 10⁸ ohms, à 10¹⁰ ohms ou à 10¹² ohms.

3. Pneu de véhicule (1) selon l'une quelconque des revendications précédentes, **caractérisé en ce que** l'identification spéciale indique qu'en raison de la haute résistance le pneu de véhicule (1) n'est pas conducteur et n'est autorisé que pour des véhicules spéciaux.

4. Pneu de véhicule (1) selon l'une quelconque des revendications précédentes, **caractérisé en ce que** le pneu de véhicule (1) n'est autorisé que pour des véhicules spéciaux à entraînement par moteur électrique.

5. Pneu de véhicule (1) selon l'une quelconque des revendications précédentes, **caractérisé en ce que** le pneu de véhicule (1) n'est autorisé que pour des véhicules spéciaux équipés d'une prise de terre de protection électrique supplémentaire.

6. Pneu de véhicule (1) selon l'une quelconque des revendications précédentes, **caractérisé en ce que** seuls des composants de pneu spéciaux présentent une résistance électrique supérieure à 10⁷ ohms, de préférence supérieure à 10⁸ ohms, à 10¹⁰ ohms ou à 10¹² ohms.

7. Pneu de véhicule (1) selon la revendication 6, **caractérisé en ce que** les composants de pneu spéciaux comprennent au moins la bande de roulement (2), les flancs (3) et/ou le caoutchoutage de ceinture.
